# EUROPÄISCHE PATENTSCHRIFT

(11) **EP 2 785 552 B1**
(45) Veröffentlichungstag und Bekanntmachung des Hinweises auf die Patenterteilung: **20.01.2016**
(21) Anmeldenummer: 12816642.8
(22) Anmeldetag: 07.11.2012
(51) Int. Cl.: B60K 17/16, B60K 17/34, F02F 7/00, F16H 3/44

(54) **ACHSANTRIEBSANORDNUNG FÜR FAHRZEUGE**
AXLE DRIVE ARRANGEMENT FOR VEHICLES
ENSEMBLE D'ENTRAÎNEMENT DES ESSIEUX DE VÉHICULES AUTOMOBILES

(30) Priorität: 30.11.2011 AT 17752011
(43) Veröffentlichungstag der Anmeldung: 08.10.2014
(73) Patentinhaber: Oberaigner, Paul Roman, 4150 Berg bei Rohrbach (AT)
(72) Erfinder: Oberaigner, Paul Roman, 4150 Berg bei Rohrbach (AT)
(74) Vertreter: Wildhack & Jellinek
(86) Internationale Anmeldenummer: PCT/AT2012/050175
(87) Internationale Veröffentlichungsnummer: WO 2013/078491

(56) Entgegenhaltungen:
- DE-A1- 4 019 765
- DE-A1-102009 009 300

## Beschreibung

Die Erfindung betrifft eine Achsantriebsanordnung gemäß dem Oberbegriff des Patentanspruches 1.

Bei Fahrzeugen mit längseingebautem Frontmotor und einer angetriebenen Hinterachse steht bei einer davon abgeleiteten Allradvariante meist wenig Platz für das Vorderachsgetriebe zur Verfügung. Das Vorderachsgetriebe muss in der Regel seitlich versetzt, unterhalb des Verbrennungsmotors angeordnet werden, oder es wird in die Motorölwanne integriert bzw. mit dieser verschraubt. Aus Bauraumgründen kann eine Anhebung des Fahrzeugniveaus erforderlich sein. Dadurch erhöht sich der Fahrzeugschwerpunkt, was fahrdynamisch von Nachteil ist. Ebenso wird das Crashverhalten des Fahrzeugs beeinflusst, insbesondere was den Fußgängerschutz anbelangt. Bei Fahrzeugen, die in der hinterradgetriebenen Ausführung gerade noch tiefgaragentauglich sind, können Niveauanhebungen dazu führen, dass die Allradvariante diesbezüglich Einschränkungen unterworfen ist. Es ist somit ein wesentliches Ziel, die allradbedingte Niveauanhebung zu minimieren.

Bei leichten Nutzfahrzeugen können im Antriebsstrang infolge der hohen Achslasten sehr große Drehmomente wirken, sodass bei einstufigen Achsgetrieben sehr große Tellerraddurchmesser erforderlich sind. Für derartige Tellerraddurchmesser gibt es üblicherweise jedoch nicht genügend Bauraum, sodass das Fahrzeugniveau erheblich angehoben werden müsste und/oder der Kegel- bzw. Hypoidradstufe nachgeschaltete Endübersetzungen erforderlich werden. Als Endübersetzungen sind infolge der hohen Drehmomentdichte insbesondere Planetengetriebe zweckmäßig.

Bei dem aus AT000000413366B bekannten zweistufigen Achsgetriebe ist zwischen Tellerrad und Ausgleichsgetriebe ein Planetengetriebe als Endübersetzung vorgesehen. Durch den zweistufigen Drehmomentaufbau kann das Tellerrad vom Durchmesser her klein gehalten werden. Zwar ist der Außendurchmesser des Getriebes sehr klein, jedoch ist er über die Breite weitgehend konstant und nutzt damit den Bauraum nicht optimal, den die Außenkontur des Motors zur Verfügung stellt. Es ist mit einem derartigen Achsgetriebe nicht möglich, eine Achsantriebsanordnung zu wählen, bei der die Abtriebswellen knapp unter dem Kurbelgehäuse-Unterteil bzw. der Motorölwanne durchgeführt werden.

Beispielsweise aus der DE000003323626C2 ist ein einstufiges Achsgetriebe bekannt, das in die Motorölwanne integriert ist. Das Differentialgetriebe ist seitlich an die Motorölwanne geschraubt und eine der beiden Abtriebswellen wird durch die Motorölwanne geführt. Die Abtriebswellen können sehr knapp unterhalb der Flanschfläche durchgeführt werden, die zwischen der Unterseite des Kurbelgehäuse-Unterteils und Motorölwanne gebildet wird. Infolge der einstufigen Übersetzung ergibt sich ein relativ großer Außendurchmesser des Tellerrades. Der erforderliche Freigang zu Komponenten, insbesondere der Lenkung, kann dadurch beeinträchtigt sein.

DE 102009009300 A offenbart eine gattungsgemäße Achsantriebsanordnung.

Ziel der Erfindung ist es, eine Achsantriebsanordnung mit den Merkmalen des Anspruchs 1 zu schaffen, das einen kleinen Außendurchmesser aufweist und es ermöglicht, die Achsen der Abtriebswellen möglichst nahe an der Motorölwanne bzw. dem Motorblock zu positionieren.

Das der erfindungsgemäßen Achsantriebsanordnung zugrundeliegende Achsgetriebe besitzt eine Kegel- bzw. Hypoidradstufe und zwei nachgeschaltete Planetenradstufen, die in einer Art und Weise verschaltet sind, dass kein separates Ausgleichsgetriebe, inbesondere Kegelraddifferential, erforderlich ist. Durch die mehrstufige Übersetzung kann der Tellerraddurchmesser klein gehalten werden, was vorteilhafterweise zu einem kleinen Außendurchmesser führt.

Indem die beiden Planetengetriebe auf unterschiedlichen Seiten des Motors positioniert werden, muss lediglich eine schlanke Welle unter dem Motor durchgeführt werden. Durch die günstige Anpassung an die Kontur des Motors ist es somit möglich, die Abtriebswellen sehr nahe an der unteren Flanschfläche des Kurbelgehäuse-Unterteils anzuordnen. Insbesondere wird es damit möglich, auf eine Niveauanhebung der Allradvariante zu verzichten oder die erforderliche Niveauanhebung so gering wie möglich zu gestalten.

Das Achsgetriebe umfasst eine Kegel- bzw. Hypoidradstufe bestehend aus einem Ritzel und einem Tellerrad. Das Tellerrad ist antriebsmäßig mit dem innenverzahnten Hohlrad eines ersten Planetengetriebes verbunden. Das Hohlrad kämmt mit mehreren Planetenrädern, die in einem Planetenträger drehbar gelagert sind. Der Planetenträger ist mit einer ersten Abtriebswelle verbunden, die antriebsmäßig auf ein Rad einwirkt. Die Planetenräder kämmen zusätzlich mit einem Sonnenrad. Das Sonnenrad ist mit einer Zwischenwelle verbunden, die unter der unteren Flanschfläche des Kurbelgehäuse-Unterteils durchgeführt ist. Die Zwischenwelle verbindet das Sonnenrad des ersten Planetengetriebes mit dem Sonnenrad des zweiten Planetengetriebes und dreht sich im Allgemeinen entgegen der Drehrichtung des Tellerrades. Das Sonnenrad des zweiten Planetengetriebes kämmt mit mehreren Planetenrädern, die in einem Planetenträger drehbar gelagert sind. Der Planetenträger des zweiten Planetengetriebes ist mit dem Gehäuse verbunden und steht somit im Betrieb still. Die Planetenräder des zweiten Planetengetriebes kämmen zudem mit einem Hohlrad, das mit einer zweiten Abtriebswelle verbunden ist, die das andere Rad antreibt.

Mit einer derartigen Getriebestruktur ergibt sich eine dem Kegel- bzw. Hypoidradsatz nachgeschaltete Übersetzung in der Größenordnung von 2,4 bis 3,3. In Verbindung mit einer Übersetzung von vorzugsweise 1,0 bis 1,75 in der Kegel- bzw. Hypoidstufe ergeben sich Übersetzungsverhältnisse, die für leichte Nutzfahrzeuge gut anwendbar sind.

Das der erfindungsgemäßen Achsantriebsanordnung zugrundeliegende Achsgetriebe bietet dank der zweistufigen Übersetzung eine hohe Drehmomentdichte. Es wird angemerkt, dass die unter dem Kurbelgehäuse-Unterteil durchgeführte Zwischenwelle im Gegensatz zu einstufigen Achsgetrieben nicht das volle Radmoment übertragen muss und aus diesem Grund mit geringerem Durchmesser ausgeführt werden kann und somit die Achse dieser Zwischenwelle noch weiter in die Nähe der Flanschfläche zwischen Kurbelgehäuse-Unterteil und Motorölwanne rücken kann. Falls das Achsgetriebe mit dem Kurbelgehäuse-Unterteil oder der Motorölwanne verschraubt wird, dann muss eine Seite der Motorölwanne bzw. des Kurbelgehäuse-Unterteils nur die Kräfte aus dem Hypoidradsatz aufnehmen, die andere Seite die Abstützmomente des zweiten Planetenradsatzes. Die Belastung wird somit verteilt auf zwei Seiten in die Motorstruktur eingeleitet, was im Hinblick auf die Belastung der Motorölwanne bzw. des Kurbelgehäuse-Unterteils vorteilhaft ist.

Da es im Gegensatz zu konventionellen Achsgetrieben kein Querdifferential zur Antriebsmomentenverteilung gibt, müssen die Übersetzungen in den beiden Planetengetrieben aufeinander abgestimmt werden, um links und rechts möglichst gleiche Radzugkräfte zu erhalten. Neben den Übersetzungen hat auch der Wirkungsgrad einen geringfügigen Einfluss auf die Querverteilung der Antriebsmomente, wobei die Querverteilung im Zug- und Schubbetrieb unterschiedlich ist. Prinzipiell ist es möglich, den Einfluss des Wirkungsgrades bei der Auslegung zu berücksichtigen und dadurch beispielsweise im Zugbetrieb eine nahezu vollständig symmetrische Antriebswirkung herzustellen.

Es kann vorgesehen sein, dass die erfindungsgemäße Achsantriebsanordnung zwei unterschiedliche Ölsysteme umfasst. Hypoidverzahnungen benötigen Hypoidöle, diese sind jedoch für die Planetengetriebe nicht zwingend erforderlich. Für die Planetengetriebe kann eine ausreichende Schmier- und Kühlwirkung auch durch das Motoröl gegeben sein. Es kann zweckmäßig sein, eine Trennung der Ölkreisläufe innerhalb des Achsgetriebes vorzunehmen, wobei zweckmäßigerweise das Planetengetriebe, das näher am Tellerrad liegt, ebenfalls mit Hypoidöl geschmiert wird, während das andere Planetengetriebe in den Ölhaushalt des Motors eingebunden sein kann. Auf diese Weise ist es nicht mehr erforderlich, die Zwischenwelle durch ein Rohr zu führen, sondern sie kann direkt durch die Ölwanne verlaufen. Dadurch wird ein vereinfachter Aufbau der Ölwanne erreicht.

Es kann vorgesehen sein, eine Kupplung bzw. Bremse im Achsgetriebe vorzusehen, um die antriebsmäßige Verbindung zwischen Eingangswelle und Rädern aufzuheben. Ein derartiges Schaltelement kann prinzipiell an verschiedenen Stellen im Achsgetriebe angeordnet werden. Besonders zweckmäßig ist die Anbringung zwischen dem zweiten Planetenträger und dem Getriebegehäuse.

Durch das Zu- und Wegschalten des Antriebs ist es insbesondere möglich, die erfindungsgemäße Achsantriebsanordnung als zuschaltenden Allradantrieb zu verwenden. Durch das Herstellen der antriebsmäßigen Verbindung wird die Vorderachse an die Hinterachse gekoppelt und damit angetrieben. Durch das Öffnen der Verbindung kann die Verbindung zwischen Vorder- und Hinterachse aufgehoben werden.

Weiters ist es in Verbindung mit einem entsprechenden Verteilergetriebe möglich, bei nicht geschaltetem Allradantrieb zur Verbesserung des Kraftstoffverbrauchs einen Teilantriebsstrang teilweise stillzulegen und dadurch die Schleppverluste zu verringern. Im Verteilergetriebe des Fahrzeugs muss hierzu eine weitere Kupplung vorhanden sein. Dadurch wird erreicht, dass bei nicht geschaltetem Allradantrieb einige Elemente, insbesondere die Kegelrad- bzw. Hypoidverzahnung des Achsgetriebes, stillstehen und dadurch keine Schleppverluste generieren.

Wenn der Planetenträger des zweiten Planetengetriebes gegenüber dem Gehäuse nicht verdrehfest ausgeführt wird, sondern mit variabler Kraft festbremsbar ist, dann kann auf diese Weise der Kraftfluss geregelt werden. Es sei angemerkt, dass eine Bremse konstruktiv wesentlich vorteilhafter als eine Kupplung ist, da die Betätigungskräfte von einem stillstehenden Teil aus aufgebracht werden können. Insbesondere ist es möglich, eine Ölpumpe zwischen Planetenträger und Getriebegehäuse anzubringen, die in Abhängigkeit von der Drehzahldifferenz zwischen dem Planetenträger des zweiten Planetengetriebes und dem Getriebegehäuse Öl fördert. Zweckmäßigerweise ist das Pumpengehäuse mit dem Getriebegehäuse verbunden bzw. einteilig ausgebildet und die Pumpenwelle mit dem Planetenträger verbunden. Die Pumpendrehzahl hängt von der Drehzahldifferenz zwischen Vorder- und Hinterachse ab. Derartige Konstruktionen sind dem Fachmann vom Grundprinzip her bekannt. Die Ölpumpe kann die Druckölversorgung eines gehäusefesten Hydraulikzylinders übernehmen, der einen Kolben verschiebt. Der Kolben kann eine Bremse, insbesondere Lamellenbremse, betätigen, die eine Drehmomentübertragung zwischen dem Getriebegehäuse und dem Planetenträger bewirkt, sodass die Vorderräder mit Antriebsmoment versorgt werden. Ein wesentlicher Vorteil gegenüber üblichen Konstruktionen ist, dass sämtliche an der Aktuierung beteiligten Elemente nicht rotieren und damit insbesondere keine Axiallager, Öldurchführungen u.dgl. erforderlich sind. Da der Kolben nicht rotiert, so ist auch keine Fliehkraftkompensation der Ölkammer erforderlich.

Eine nasslaufende Lamellenbremse erfordert zumeist Öle mit besonderer Additivierung. Es ist somit vorteilhaft, wenn die Lamellenbremse nicht in den Ölhaushalt der Hypoidverzahnung integriert ist, sondern einen eigenen Ölkreislauf mit dem zweiten Planetenradsatz teilt, der weiter vom Tellerrad entfernt ist.
Fig. 1 zeigt schematisch die erfindungsgemäße Achsantriebsanordnung und den Aufbau des Achsgetriebes.
Fig. 2 zeigt eine Ausführungsform, bei der eine Entkopplung zwischen Eingangswelle und den Abtriebswellen zu linkem und rechtem Rad möglich ist.
Fig. 3 zeigt eine mögliche Ausführung eines Hydrauliksystems für eine Achsantriebsanordnung nach Fig. 2.
Fig. 4 zeigt schematisch ein Fahrzeug mit der erfindungsgemäßen Achsantriebsanordnung in seitlicher Ansicht.
Fig. 5 zeigt schematisch ein Fahrzeug mit der erfindungsgemäßen Achsantriebsanordnung in Draufsicht.

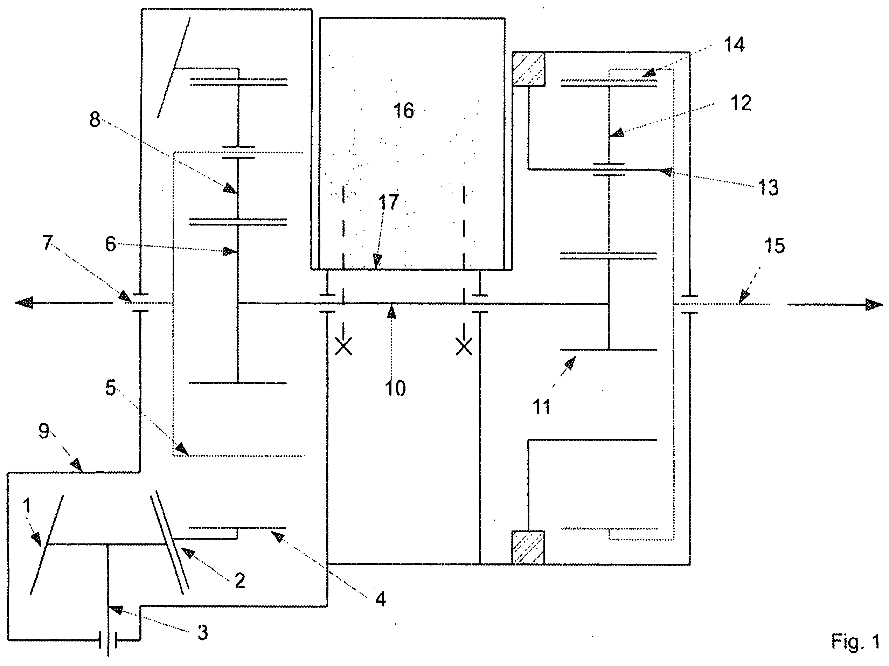

Fig. 1 zeigt schematisch die erfindungsgemäße Achsantriebsanordnung und den Aufbau des Achsgetriebes. Eine Eingangswelle 3 ist mit einem Kegelritzel 1 verbunden. Das Kegelritzel 1 kämmt mit einem Tellerrad 2. Das Tellerrad 2 ist mit einem Hohlrad 4 verbunden. Das Hohlrad 4 kämmt mit mehreren Planetenrädern 8. Die Planetenräder 8 sind drehbar in einem Planetenträger 5 gelagert. Der Planetenträger 5 ist mit einer ersten Abtriebswelle 7 verbunden. Die Planetenräder 8 kämmen weiters mit einem Sonnenrad 6. Das Sonnenrad 6 ist mit einer Zwischenwelle 10 verbunden bzw. einstückig ausgebildet. Die Zwischenwelle 10 ist weiters mit einem Sonnenrad 11 verbunden bzw. einstückig ausgebildet. Die Zwischenwelle 10 verläuft unterhalb des Kurbelgehäuse-Unterteils 16. Das Sonnenrad 11 kämmt mit mehreren Planetenrädern 12. Die Planetenräder 12 sind drehbar in einem Planetenträger 13 gelagert. Der Planetenträger 13 ist mit dem gegebenenfalls mehrteilig ausgeführten Getriebegehäuse 9 verdrehfest verbunden. Die Planetenräder 12 kämmen weiters mit einem Hohlrad 14. Das Hohlrad 14 ist mit der Abtriebswelle 15 verbunden.

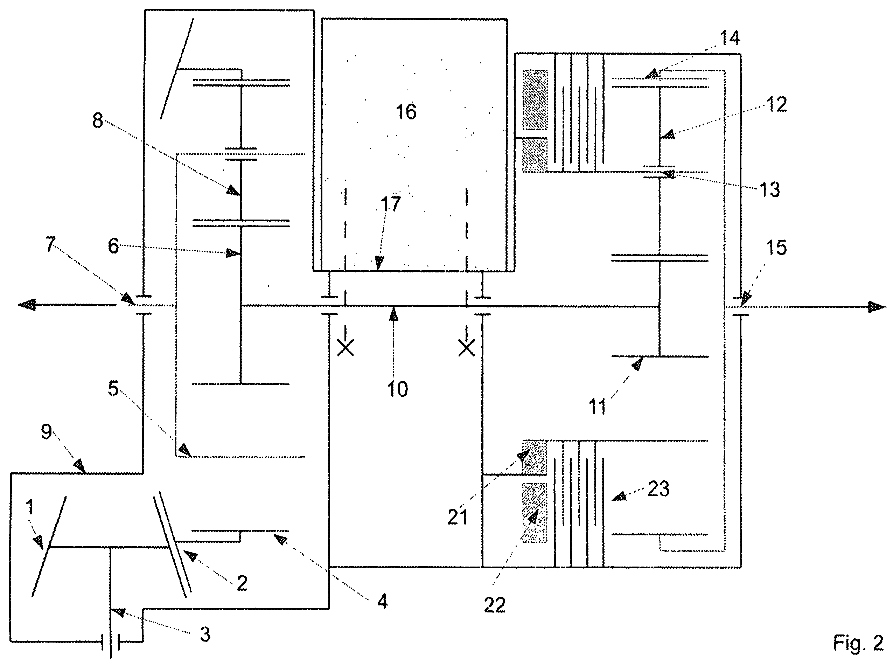

Fig. 2 zeigt eine Ausführungsform, bei der eine Entkopplung zwischen Eingangswelle 3 und den beiden Ausgangswellen 7, 15 möglich ist. Die Eingangswelle 3 ist mit dem Kegelritzel 1 verbunden. Das Kegelritzel 1 kämmt mit dem Tellerrad 2. Das Tellerrad 2 ist mit dem Hohlrad 4 verbunden. Das Hohlrad 4 kämmt mit mehreren Planetenrädern 8. Die Planetenräder 8 sind drehbar im Planetenträger 5 gelagert. Der Planetenträger 5 ist mit der ersten Abtriebswelle 7 verbunden. Die Planetenräder 8 kämmen weiters mit dem Sonnenrad 6. Das Sonnenrad 6 ist mit der Zwischenwelle 10 verbunden bzw. einstückig ausgebildet. Die Zwischenwelle 10 ist weiters mit dem Sonnenrad 11 verbunden bzw. einstückig ausgebildet. Die Zwischenwelle 10 verläuft unterhalb des Kurbelgehäuse-Unterteils 16. Das Sonnenrad 11 kämmt mit mehreren Planetenrädern 12. Die Planetenräder 12 sind drehbar im Planetenträger 13 gelagert. Die Planetenräder 12 kämmen weiters mit dem Hohlrad 14. Das Hohlrad 14 ist mit der Abtriebswelle 15 verbunden. Der Planetenträger 13 kann sich gegenüber dem gegebenenfalls mehrteilig ausgeführten Getriebegehäuse 9 verdrehen. Das Verdrehen des Planetenträgers 13 gegenüber dem Getriebegehäuse 9 führt dazu, dass eine Ölpumpe 21 Öl fördert. Das geförderte Öl kann zum Druckaufbau im Antriebszylinder eines Kolbens 22 verwendet werden, der eine Kupplung 23, insbesondere Lamellenkupplung, schließt.

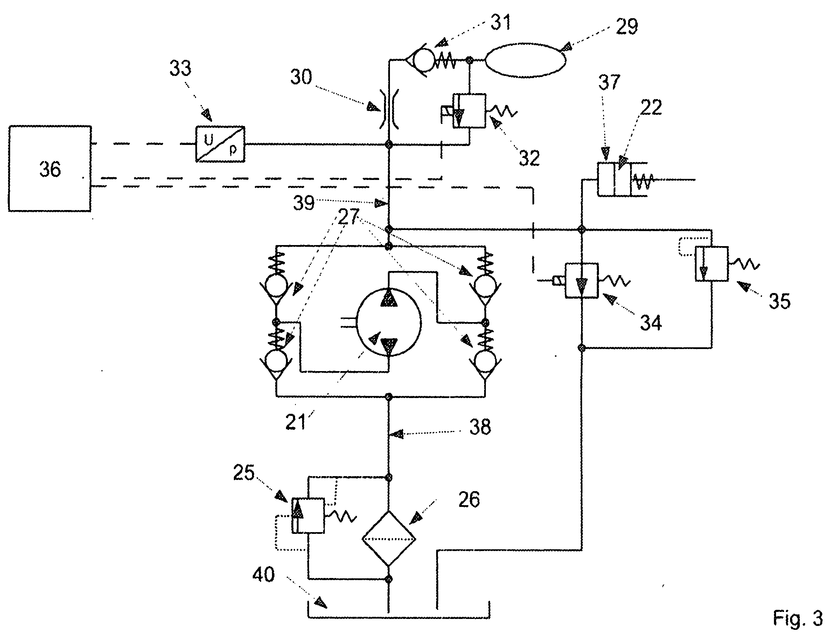

Fig. 3 zeigt eine mögliche Ausführung eines Hydrauliksystems für eine Achsantriebsanordnung nach Fig. 2. Die Ölpumpe 21 läuft mit der Drehzahl des Planetenträgers 13. Wenn zwischen Vorder- und Hinterachse Drehzahldifferenzen auftreten, dann dreht sich der Planetenträger 13 relativ zu dem Gehäuse 9, sodass die Ölpumpe 21 Öl fördert. Mit gegebenenfalls federbetätigten Rückschlagventilen 27 wird sichergestellt, dass unabhängig von der Drehrichtung der Ölpumpe 21 eine eindeutige Saugleitung 38 und Druckleitung 39. existiert. Das Öl wird aus einem Reservoir 40, insbesondere dem Getriebeölsumpf, angesaugt und kann gegebenenfalls mit einem Ölfilter 26 gereinigt werden. Der Ölfilter 26 kann ein Differenzdruckventil 25 aufweisen, das bei einem zu großen Druckabfall einen Filter-Bypass öffnet. Druckseitig wird der Kolben 22 mit Öl aus der Druckleitung 39 versorgt. Ein Regelventil 34 ermöglicht einen Druckabbau. Das Regelventil 34 kann elektronisch oder mechanisch angesteuert werden. Ein Druckbegrenzungsventil 35 dient zur Begrenzung des Höchstdrucks in der Druckleitung 39. Ein Drucksensor 33 in der Druckleitung 39 ermöglicht die Bestimmung des Drucks, sodass daraus das von der Kupplung 23 übertragene Drehmoment mit hinreichender Genauigkeit in der Steuereinheit 36 ermittelt werden kann. Über den gemessenen Druck und der bekannten die Fläche des Kolbens 22 kann die Kolbenkraft abgeschätzt werden. Mit der Kenntnis der Kolbenkraft und den bekannten Daten zur Kupplung kann das Kupplungsmoment in hinreichender Genauigkeit bestimmt werden. Es kann druckseitig ein Druckspeicher 29 vorgesehen sein, der mit Hilfe eines zuvor eingespeicherten Öldrucks eine rasche Betätigung des Kolbens 22 ermöglicht, noch bevor Drehzahldifferenzen auftreten. Dies ist insbesondere beim Anfahren vorteilhaft. Über ein gegebenenfalls federbetätigtes Rückschlagventil 31 wird der Druckspeicher 29 befüllt. Eine Drossel 30 kann vorgesehen sein, um die Befüllgeschwindigkeit des Druckspeichers 29 zu begrenzen. Dies kann zweckmäßig sein, um eine raschere Betätigung des Kolbens 22 bei leerem Druckspeicher 29 sicherzustellen. Der im Druckspeicher 32 vorhandene Druck kann über ein Ventil 32, insbesondere Regelventil, zur Versorgung des Kolbens 22 genutzt werden.

Ein elektronisches Regelsystem 36 wertet Messungen des Drucksensors 33 aus und steuert über das Regelventil 34 und das Ventil 32 den Allradantrieb. Durch Vorgabe eines Drucks kann das Antriebsmoment bestimmt werden, das zur Vorderachse geleitet wird. Eingangsgrößen für die Regelung können insbesondere Daten sein, die von einem Fahrdynamikregelsystem ermittelt und/oder vorgegeben werden. Durch geeignete Ansteuerung kann das Fahrverhalten des Fahrzeugs gezielt beeinflusst werden. Bei einer Bremsung wird durch ein gezieltes Öffnen der Bremse 34 eine einwandfreie Funktion des Bremsenregelsystems unterstützt.

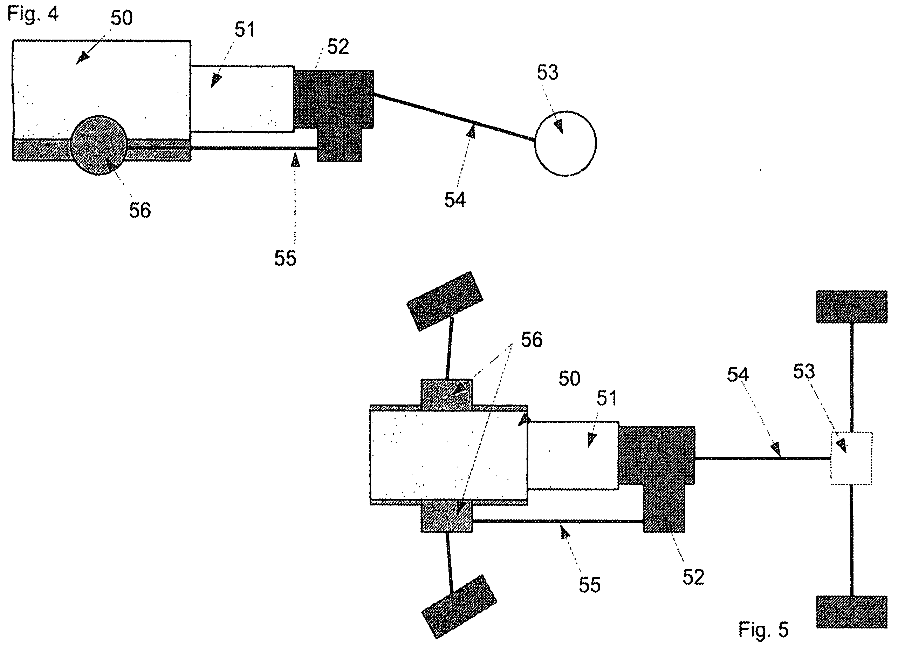

Fig. 4 und Fig. 5 zeigen schematisch ein Fahrzeug mit der erfindungsgemäßen Achsantriebsanordnung in seitlicher Ansicht (Fig. 4) bzw. in Draufsicht (Fig. 5). Ein Verbrennungsmotor 50 ist antriebsmäßig mit einem Getriebe 51, insbesondere Schalt- oder Automatikgetriebe, verbunden. Das Getriebe 51 ist antriebsmäßig mit einem Verteilergetriebe 52 verbunden. Das Verteilergetriebe 52 kann an das Getriebe 51 direkt angeflanscht sein. Über eine Kardanwelle 54 wird das Hinterachsgetriebe 53 antriebsmäßig an das Verteilergetriebe 52 angeschlossen. Über eine Kardan- oder Gleichlaufgelenkwelle 55 wird das Vorderachsgetriebe 56 antriebsmäßig an das Verteilergetriebe 52 angeschlossen.

Aus Fig. 4 ist der geringe Durchmesser des Achsgetriebes 56 gut erkennbar. Aus Fig. 5 ist ersichtlich, dass die Anordnung von jeweils einem Planetengetriebe zu jeder Seite des Motors eine äußerst günstige Bauraumausnutzung ermöglicht.

Ganz allgemein wird bemerkt, dass mit "unten" jene Fläche gemeint ist, welche näher zur Straße liegt. Mit unterer Flanschfläche des Kurbelgehäuse-Unterteils ist somit also jene Fläche zu verstehen, welche dem Kurbelgehäuse-Oberteil nicht zugewandt ist. Weiters ist unter linker bzw. rechter Seite des Kurbelgehäuse-Unterteils jene Seite zu verstehen, die dem linken bzw. rechtem Vorderrad zugewandt ist.

## Patentansprüche

1. Achsantriebsanordnung für Fahrzeuge mit einem längs eingebautem Motor und einem zwei Planetengetriebe besitzenden Getriebe, umfassend eine Eingangswelle (3) und zwei Ausgangswellen (7,15), wobei die Eingangswelle (3) mit einem Kegelritzel (1) verbunden ist, das mit einem Tellerrad (2) kämmt, wobei das Tellerrad (2) mit einem Hohlrad (4) des ersten Planetengetriebes verbunden ist, wobei das Hohlrad (4) mit mehreren in einem Planetenträger (5) drehbar gelagerten Planetenrädern (8) kämmt, wobei der Planetenträger (5) mit der einer ersten Abtriebswelle (7) verbunden ist, wobei die Planetenräder (8) weiters mit einem Sonnenrad (6) kämmen, wobei das Sonnenrad (6) mit dem Sonnenrad (11) des zweiten Planetengetriebes über eine Zwischenwelle (10) verbunden ist, wobei das Sonnenrad (11) mit mehreren Planetenrädern (12) kämmt, wobei die Planetenräder (12) im Planetenträger (13) drehbar gelagert sind, wobei die Planetenräder (12) mit einem Hohlrad (14) kämmen, wobei das Hohlrad (14) mit der Abtriebswelle (15) verbunden ist, wobei der Planetenträger (13) mit dem gegebenenfalls mehrteiligen Getriebegehäuse (9) verbunden ist, **dadurch gekennzeichnet, dass** die Zwischenwelle (10) unter einem Kurbelgehäuse-Unterteil (16) verläuft oder durch ein Kurbelgehäuse-Unterteil (16) läuft, und dass die obere Erstreckung bzw. das oberste Niveau des Umfanges der Hohlräder (4,14) oberhalb einer unteren Flanschfläche (17) des Kurbelgehäuse-Unterteils (16) liegt.

2. Achsantriebsanordnung nach Anspruch 1, **dadurch gekennzeichnet, dass** das Getriebegehäuse (9) an der unteren Flanschfläche (17) des Kurbelgehäuse-Unterteils (16) anliegt und/oder dass das Getriebegehäuse (9) mit dem Kurbelgehäuse-Unterteil (16) starr verbunden, vorzugsweise verschraubt, ist.

3. Achsantriebsanordnung nach einem der Ansprüche 1 bis 2, **dadurch gekennzeichnet, dass** Kegelritzel (1), Tellerrad (2), Hohlrad (4), Planetenträger (5), Planetenräder (8) und Sonnenrad (6) des ersten Planetengetriebes auf der gleichen Seite des Kurbelgehäuse-Unterteils (16) angeordnet sind.

4. Achsantriebsanordnung nach einem der Ansprüche 1-3, **dadurch gekennzeichnet, dass** Sonnenrad (11), Planetenräder (12), Planetenträger (13) und Hohlrad (14) des zweiten Planetengetriebes auf der dem Tellerrad (2) abgewandten Seite des Kurbelgehäuse-Unterteils (16) angeordnet sind.

5. Achsantriebsanordnung nach einem der Ansprüche 1 bis 4, **dadurch gekennzeichnet, dass** das Gehäuse (9) mehrteilig ausgeführt ist, wobei das Kegelritzel (1), das Tellerrad (2), das Hohlrad (4), die Planetenräder (8) und das Sonnenrad (6) ein erstes Ölsystem bilden bzw. in einem ersten Gehäuseabschnitt angeordnet sind und das Sonnenrad (11), die Planetenräder (12) und das Hohlrad (14) ein zweites, getrenntes Ölsystem bilden bzw. in einem zweiten, getrennten Gehäuseabschnitt angeordnet sind.

6. Achsantriebsanordnung nach Anspruch 5, **dadurch gekennzeichnet, dass** im ersten Ölsystem Hypoidgetriebeöl eingesetzt ist und das zweite, getrennte Ölsystem in die Schmierölversorgung des Motors integriert ist.

7. Achsantriebsanordnung nach einem der Ansprüche 1-6, **dadurch gekennzeichnet, dass** eine lösbare Verbindung zwischen dem Planetenträger (13) und dem Getriebegehäuse (9) über eine schaltbare Bremse (23), insbesondere Lamellenbremse, hergestellt ist.

8. Achsantriebsanordnung nach Anspruch 7, **dadurch gekennzeichnet, dass** eine Ölpumpe (22) zwischen dem Planetenträger (13) und dem Getriebegehäuse (9) angeordnet ist und in Abhängigkeit der Drehzahl des Planetenträgers (13) Öl fördert, wobei die Ölpumpe (22), gegebenenfalls über einen Ölfilter (26) Öl, aus dem Ölsumpf (40) des Getriebes fördert, wobei Rückschlagventile (27) zur Sicherstellung einer richtungsunabhängigen Förderung vorgesehen sind, wobei ein von der Ölpumpe (22) beaufschlagbarer Betätigungskolben (22) für die Lamellenbremse (23) vorgesehen ist und ein elektrisches Schaltventil (34) vorgesehen ist, das einen Druckabbau ermöglicht.

9. Achsantriebsanordnung nach Anspruch 8, **dadurch gekennzeichnet, dass** der Betätigungsdruck des Kolbens (22) von einem Drucksensor (33) erfasst ist und eine Steuereinheit (36) vorgesehen ist, die das elektrische Schaltventil (34) in Abhängigkeit der Daten des Drucksensors (33) steuert.

## Claims

1. Axle drive assembly for vehicles with a longitudinal engine and a transmission comprising two planetary gears with an input shaft (3) and two output shafts (7, 15), wherein the input shaft (3) is connected with a bevel pinion (1), which meshes with a crown wheel (2), wherein the crown wheel (2) is connected to a ring gear (4) of the first planetary gear, wherein the ring gear (4) meshes with a plurality of planet gears (8) rotatably mounted in a planet carrier (5), wherein the planet carrier (5) is connected to a first output shaft (7), wherein the planet gears (8) further mesh with a sun gear (6), wherein the sun gear (6) is connected with the sun gear (11) of the second planetary gear train through an intermediate shaft (10), wherein the sun gear (11) meshes with a plurality of planet gears (12), wherein the planet gears (12) are rotatably mounted in the planet carrier (13), wherein the planet gears (12) mesh with a ring gear (14), wherein the ring gear (14) is connected to the output shaft (15), wherein the planet carrier (13) is connected to the optionally multi-part gear housing (9), **characterised in that** the intermediate shaft (10) runs under a crankcase lower part (16) or through a crankcase lower part (16), and that the upper extension or the uppermost level of the circumference of the ring gears (4, 14) lies above a lower flange surface (17) of the crankcase lower part (16).

2. Axle drive assembly according to claim 1, **characterised in that** the gear housing (9) lies at the lower flange surface (17) of the crankcase lower part (16), and/or that the gear housing (9) is rigidly connected, preferably screwed, to the crankcase lower part (16).

3. Axle drive assembly according to any one of the claims 1 to 2, **characterised in that** the bevel pinion (1), crown wheel (2), ring gear (4), planet carrier (5), planet gears (8) and sun gear (6) of the first planetary gear are arranged on the same side of the crankcase lower part (16).

4. Axle drive assembly according to any one of the claims 1-3, **characterised in that** the sun gear (11), planet gears (12), planet carrier (13) and ring gear (14) of the second planetary gear are arranged on the side of the crankcase lower part (16) facing away from the crown wheel (2).

5. Axle drive assembly according to any one of the claims 1 to 4, **characterised in that** the gear housing (9) is constructed in several parts, wherein the bevel pinion (1), the crown wheel (2), the ring gear (4), the planet wheels (8) and the sun gear (6) form a first oil system and are arranged in a first housing section, while the sun gear (11), the planet wheels (12) and the ring gear (14) form a second separate oil system, or are arranged in a second, separate housing section.

6. Axle drive assembly according to claim 5, **characterised in that** hypoid gear oil is used in the first oil system, while the second separate oil system is integrated in the lubricating oil supply of the engine.

7. Axle drive assembly according to any one of the claims 1-6, **characterised in that** a releasable connection is produced between the planet carrier (13) and the gear housing (9) via a switchable brake (23), in particular a multi-disk brake.

8. Axle drive assembly according to claim 7, **characterised in that** an oil pump (22) is arranged between the planet carrier (13) and the gear housing (9) and supplies oil as a function of the speed of the planet carriers (13), wherein the oil pump (22) is optionally supplied oil from the gear oil sump (40) via an oil filter (26), wherein check valves (27) are provided to ensure uni-directional supply, wherein an actuating piston (22) acted upon by the oil pump (22) is provided for the multi-disk brake (23), while an electric switching valve (34) is provided to make pressure reduction possible.

9. Axle drive assembly according to claim 8, **characterised in that** the operating pressure of the piston (22) is detected by a pressure sensor (33), while a control unit (36) is provided to control the electric switching valve (34) as a function of the data of the pressure sensor (33).

## Revendications

1. Dispositif d'entraînement d'essieu pour véhicules avec un moteur longitudinal et une transmission comprenant deux engrenages épicycloïdaux, comprenant un arbre d'entrée (3) et deux arbres de sortie (7, 15), l'arbre d'entrée (3) étant relié avec un pignon conique (1), qui s'engrène avec une couronne (2), la couronne (2) étant reliée à une roue intérieure (4) du premier engrenage épicycloïdal, la roue intérieure (4) s'engrenant avec plusieurs roues satellites (8) logées de manière rotative dans un porte-satellite (5), le porte-satellite (5) étant relié avec un premier arbre de sortie (7), les roues satellites (8) s'engrenant en outre avec une roue solaire (6), la roue solaire (6) étant reliée avec la roue solaire (11) du deuxième engrenage épicycloïdal par l'intermédiaire d'un arbre intermédiaire (10), la roue solaire (11) s'engrenant avec plusieurs roues satellites (12), les roues satellites (12) s'engrenant avec une roue intérieure (14), la roue intérieure (14) étant reliée à l'arbre de sortie (15), le porte-satellite (13) étant relié avec le carter de transmission (9), éventuellement en plusieurs parties, **caractérisé en ce que** l'arbre intermédiaire (10) s'étend sous une partie inférieure de carter de vilebrequin (16) ou traverse une partie inférieure de carter de vilebrequin (16) et **en ce que** l'extension supérieure ou le niveau le plus haut de la circonférence des roues intérieures (4, 14) se trouve au-dessus d'une surface de bride inférieure (17) de la partie inférieure de carter de vilebrequin (16).

2. Dispositif d'entraînement d'essieu selon la revendication 1, **caractérisé en ce que** le carter de transmission (9) s'appuie contre la surface de bride inférieure (17) de la partie inférieure de carter de vilebrequin (16) et/ou **en ce que** le carter de transmission (9) est relié de manière rigide, de préférence vissé, avec la partie inférieure de carter de vilebrequin (16).

3. Dispositif d'entraînement d'essieu selon l'une des revendications 1 à 2, **caractérisé en ce que** le pignon conique (1), la couronne (2), la roue intérieure (4), le porte-satellite (5), la roue satellite (8) et la roue solaire (6) du premier engrenage épicycloïdal sont disposés sur le même côté de la partie inférieure de carter de vilebrequin (16).

4. Dispositif d'entraînement d'essieu selon l'une des revendications 1 à 3, **caractérisé en ce que** la roue solaire (11), les roues satellites (12), le porte-satellite (13) et la roue intérieure (14) du deuxième engrenage épicycloïdal sont disposés sur le côté de la partie inférieure de carter de vilebrequin (16) opposé à la couronne (2).

5. Dispositif d'entraînement d'essieu selon l'une des revendications 1 à 4, **caractérisé en ce que** le carter (9) est constitué de plusieurs parties, le pignon conique (1), la couronne (2), la roue intérieure (4), les roues satellites (8) et la roue solaire (6) constituant un premier système de lubrification ou sont disposés dans une première partie de carter et la roue solaire (11), les roues satellites (12) et la roue intérieure (14) constituant un deuxième système de lubrification séparé ou sont disposées dans une deuxième partie de carter séparée.

6. Dispositif d'entraînement d'essieu selon la revendication 5, **caractérisé en ce que**, dans un premier système de lubrification, de l'huile de transmission hypoïde est utilisée et le deuxième système de lubrification séparé est intégré dans l'alimentation en huile de lubrification du moteur.

7. Dispositif d'entraînement d'essieu selon l'une des revendications 1 à 6, **caractérisé en ce qu'**une liaison amovible est établie entre le porte-satellite (13) et le carter de transmission (9) par l'intermédiaire d'un frein commutable (23), plus particulièrement un frein multidisques.

8. Dispositif d'entraînement d'essieu selon la revendication 7, **caractérisé en ce qu'**une pompe à huile (22) est disposée entre le porte-satellite (13) et le carter de transmission (9) et transporte l'huile en fonction de la vitesse de rotation du porte-satellite (13), la pompe à huile (22) transportant l'huile, le cas échéant par l'intermédiaire d'un filtre à huile (26), à partir du réservoir d'huile (40) de la transmission, des clapets anti-retour (27) étant prévus pour assurer un transport indépendant de la direction, un piston d'actionnement (22) alimenté par la pompe à huile (22) étant prévu pour le frein multidisques (23) et une soupape de commande électrique (34) étant prévu, qui permet une réduction de la pression.

9. Dispositif d'entraînement d'essieu selon la revendication 8, **caractérisé en ce que** la pression d'actionnement du piston (22) est mesurée par un capteur de pression (33) et une unité de commande (36) est prévue, qui commande la soupape de commande électrique (34) en fonction des données provenant du capteur de pression (33).
